# EUROPEAN PATENT SPECIFICATION

(11) **EP 0 287 165 B1**
(45) Date of publication and mention of the grant of the patent: **22.06.1994**
(21) Application number: 88200679.4
(22) Date of filing: 11.04.1988
(51) Int. Cl.: A01C 17/00, G05D 7/06

(54) **A machine for spreading material**
Streuer
Machine pour épandre un matériau

(30) Priority: 13.04.1987 NL 8700860
(43) Date of publication of application: 19.10.1988
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- FR-A- 596 921
- FR-A- 2 571 209
- GB-A- 2 058 533
- NL-A- 7 315 485
- US-A- 4 238 956
- US-A- 4 277 022

## Description

The invention relates to a machine for spreading material, e.g. fertilizer, which machine comprises a frame, a hopper and at least one spreading member, the machine includes a weighing apparatus provided below a discharge outlet of the hopper, via which weighing apparatus, during operation, material is fed to the spreading member, the weighing apparatus being bearing supported, in horizontal position of the machine, by an at least substantially horizontal pivot axis.

A machine of this kind is known from the US-A-4 277 022.

The invention has for its object to improve a machine of this type such that the distribution of the material to be spread over a surface to be spread can be improved.

According to the invention, this is achieved in that the horizontal pivot axis lies in one plane with an upwardly extending pivotal axis through the centre of the discharge outlet.

With the position of the horizontal pivot axis as according to the invention an accurate measuring of the quantity of material on the weighing apparatus can be obtained. The forces existing by the falling of the material delivered out of the discharge outlet on the weighing apparatus will be absorbed by the horizontal pivot axis. Hereto only the quantity of material present on the weighing apparatus need to be weighed, this quantity of material can be measured accurately.

In a favourable embodiment of the machine according to the invention the weighing apparatus forms a guide member which is adjustable with respect to the position of the spreading member in the machine, the arrangement being such that therewith the direction of spread of the material to be spread by the spreading member can be controlled. A simple construction can be obtained hereby when according to a further embodiment the weighing apparatus is adjustable about the upwardly extending pivotal axis and that the spreading member is drivable about an upwardly extending axis of rotation.

According to a further embodiment of the machine according to the invention the outflow opening of the weighing apparatus is located at a distance from the upwardly extending pivotal axis, which exceeds that of outer boundaries of the discharge outlet to that pivotal axis. Hereby the accuracy of measuring the quantity of material on the weighing apparatus can be improved.

An advantageous embodiment of the machine according to the invention is obtained when the weighing apparatus includes a material-receiving holder which, at least during operation, is arranged movably about the horizontal pivot axis in the machine and is connected at least partially to parts of the machine via a weighing device.

In a machine according to the invention, the machine includes a display device which continuously displays the quantity of material that is spread per unit of surface area during operation. In this way, the spread of material during operation can easily be monitored and be adjusted, if necessary.

An advantageous embodiment is obtained when the display device is connected to the weighing device by means of flexible connections, the arrangement being such that the display device can be accommodated in a vehicle moving the machine during operation.

In accordance with a further embodiment, near the discharge outlet of the hopper from which material is fed to the weighing device there is provided a dosing device, by means of which the discharge outlet is optionally closable to a greater or lesser extent, the said dosing device being coupled to an adjusting member which is coupled to the control device including the display device. In this manner, the dosing device can be adjusted via the control device in a simple manner so as to allow of, e.g. the spread of the desired quantity of material per hectare.

In accordance with a still further embodiment, the machine includes a control device, by means of which the quantity of material to be spread per unit of surface area can be controlled automatically by weight measurement during operation. For that purpose, the control device may be provided with an electronic device which processes the measuring data from the weighing device together with other data to obtain an automatic adjustment of the dosing device in order to reach an appropriate quantity of material per unit of surface to be spread.

The invention furthermore relates to a machine according to the invention wherein the spreading member is rotatable about an axis of rotation, the portions of the spreading member that are most remote from the axis of rotation being located on a diameter which is approximately 100 cms or more. In this situation, the speed of rotation of the spreading member can be kept comparatively low, so that, when flowing to the spreading member, the material contacts the spreading member with comparatively low impact forces. Thus, the structure of the material to be spread may be preserved on contacting the spreading member, whilst the spreading member can still impart and adequately high throwing speed to the material so as to allow the material to be spread over a comparatively large distance.

In a further embodiment of the machine according to the invention the control device has a display available which, during operation, gives an indication about the direction in which the material is spread, in particular whether this spread is effected in the appropriate direction relative to the centre of the machine.

In an advantageous embodiment, the spreader includes at least one sensor co-operating with the control device and located relative to the spreading member in such a way that, during operation, it is located at least near the paths of the material to be spread, the arrangement being such that the sensor provides an indication of the direction of spread of the material, so that it can be adjusted on the basis of the information supplied thereby. In this way, it is possible to control the distribution of the material over the area to be spread.

In accordance with the invention, the device co-operating with the sensor is arranged such that on the display is given an indication of the direction in which the material is spread. According to an advantageous embodiment, the display device is connected to other parts of the machine by means of flexible connections in such a way that the display can be accommodated in a vehicle moving the machine during operation. Owing hereto, the direction of spread can be observed easily during operation, so that, in accordance with a further embodiment, it can be adjusted to maintain the appropriate direction of spread.

An advantageous embodiment is obtained when there are provided at least two sensors which give an indication of the direction of spread of the material. An advantageously operating machine can be obtained when the adjusting member is coupled to a control device which cooperates with the sensor, the arrangement being such that, by means of electronic means in the control device, the sensor indication effects an automatic adjustment of the guide member to obtain the appropriate direction of spread of the material to be spread. Thus, the direction of spread of the material to be spread can be maintained automatically during operation.

For a better understanding of the invention and to show how the same may be carried into effect, reference will now be made, by way of example, to the accompanying drawings, in which:
Figure 1 is a side view of a tractor-drawn machine for spreading material;
Figure 2 is, to an enlarged scale, a plan view of the machine, part of the hopper having been omitted;
Figure 3 is, to an enlarged scale, a front view of part of the machine, taken in the direction of the arrow III in Figure 2;
Figure 4 is a cross-sectional view of the part shown in Figure 3, taken on the line IV - IV in Figure 3;
Figure 5 is a plan view of part of the machine, taken on the line V - V in Figure 4;
Figure 6 is a view of a control arrangement of the machine, and
Figure 7 shows a different embodiment of a control arrangement of the machine according to the invention.

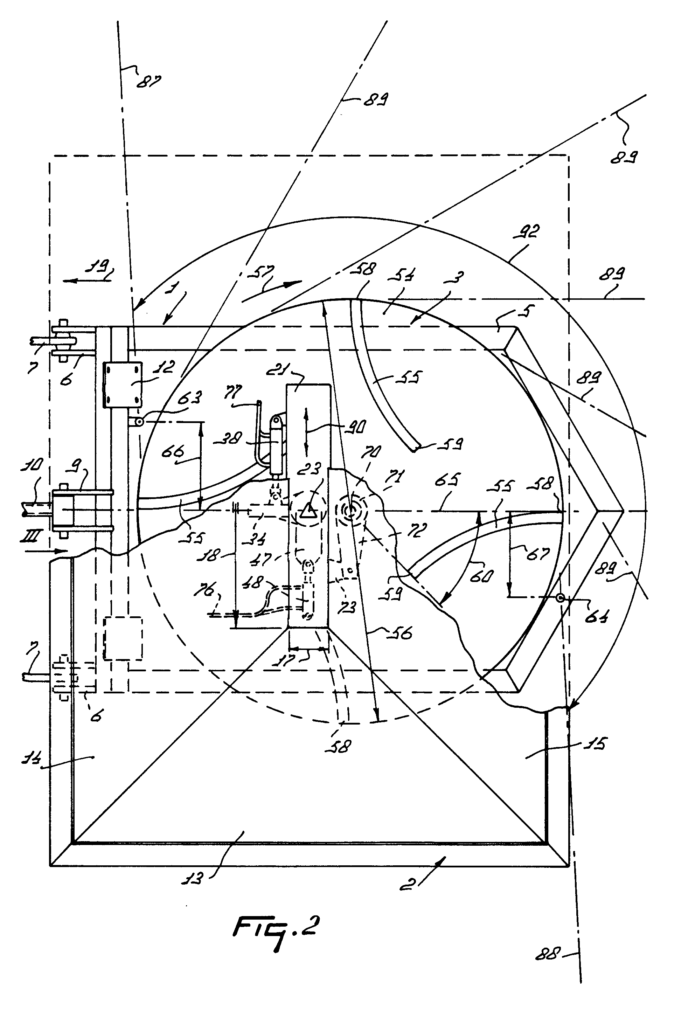

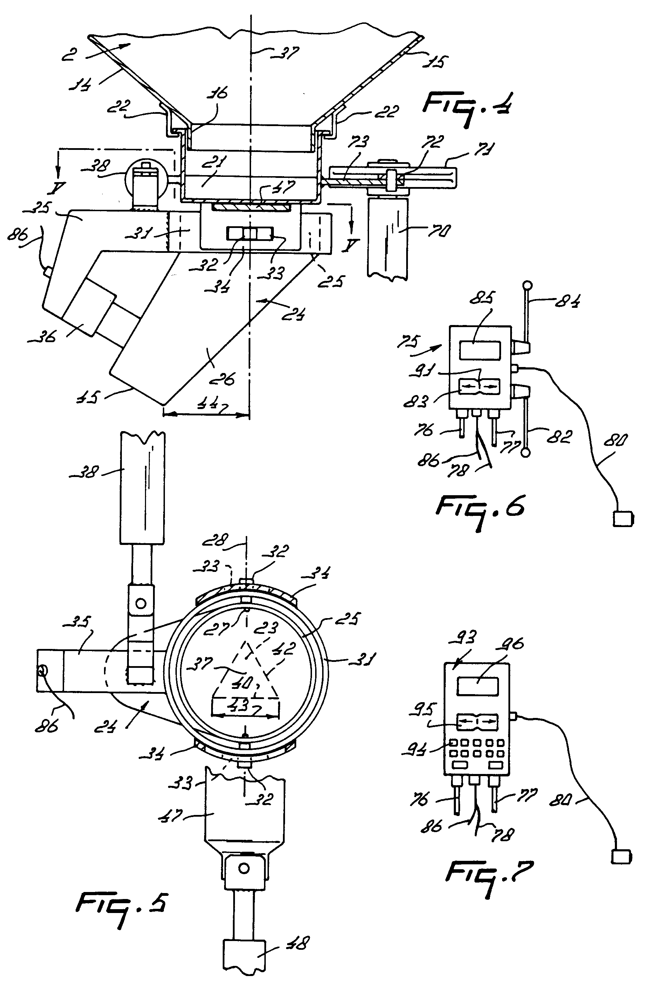

The machine for spreading material as shown in the drawings comprises a frame 1, a hopper 2 and a spreading member 3. The frame 1 includes an upwardly extending frame portion 4 which is located at the front side of the hopper 2 and of the spreading member 3. A horizontal frame portion 5 carrying the spreading member 3 is provided at the bottom side of the frame portion. The frame portion 4 is fitted with connection members 6, by means of which the spreader can be coupled to the lifting arms 7 of a tractor 8 or a suchlike vehicle. Near the top side of the frame portion 4 there is provided a connection member 9, by means of which the spreader can be coupled to the top rod 10 of the three-point lifting hitch of the tractor 8. The frame 1 has support arms 11 supporting the hopper which is furthermore connected to hopper supports provided at the top side of the frame portion 4. As is apparent in particular from Figure 2, the hopper 2 is rectangular in shape and has side walls 13, a front wall 14 and a rear wall 15. The walls 13 to 15 converge downwardly and, near the bottom side of the hopper 2, form an elongate discharge nozzle 16. The elongate discharge nozzle 16 has its width 17 located parallel to the direction of operative travel 19 of the spreader, while its length 18 extends perpendicularly thereto. The length 18 is a multiple of the width 17, in this embodiment the length 18 being approximately six times that of the width 17.

A discharge member 21 is contiguous to the discharge nozzle 16. The discharge member 21 is trough-shaped and is supported movably in its longitudinal direction on supports 22 provided at the bottom side of the hopper. The discharge member 21 has a discharge outlet 23 in the bottom, which outlet, in this embodiment, is of a triangular shape. A guide member 24 is provided below the discharge outlet 23. At its upper side, the guide member 24 comprises a cylindrical ring 25 to which a downwardly converging nozzle-shaped portion 26 is contiguous. The guide member 24 is provided pivotably about a horizontal pivotal axis 28 in the spreader. To that end, the ring 25 is bearing-supported rotatably about the pins 27 which are fixed to a carrier bracket 31. By means of supports 32 which are arranged in the extension of the pins 27, the carrier bracket is supported in slotted apertures 33 provided in carrier strips 34, which are connected to the bottom side of the discharge member 21. The carrier bracket 31 has a carrier arm 35, from which the lower end of the nozzle 26 is suspended by means of a weighing box 36. The carrier bracket 31 is pivotal together with the guide member 24 about an upwardly extending pivotal axis 37. The carrier bracket 31 is coupled pivotably by means of the carrier arm 35 to an adjusting device 38, which, in this embodiment, is a hydraulic mechanism and is attached to the discharge member 21.

Seen in plan view, by means of one side 40, the triangular discharge outlet 23 extends parallel to the direction of operative travel 19. The two other sides 42 are arranged such that the sides 40 and 42 constitute an equilateral triangle having its apexes spaced equidistantly from the pivotal axis 37. The portion of the outflow opening 45 of the nozzle 26 that is closest to the pivotal axis 37 is located at a distance 44 therefrom, which distance exceeds that of those portions of the discharge outlet 23 which are most remote from the pivotal axis 37. The discharge outlet 23 is provided at least approximately halfway the length of the discharge member 21. In this situation, the discharge outlet 23 is located in the lowest portion of the bottom of the trough-shaped discharge member 21. From the width 17, this bottom extends at a slight downward angle to near the centre portion thereof. At a horizontal position of the machine, this centre portion is horizontal and comprises the discharge outlet 23.

Below the centre portion of the bottom of the discharge member 21 there is provided a doser device constituted by a slide 47 for closing the discharge outlet 23 to a greater or lesser extent. The doser slide is coupled to an adjusting device 48 which, in this embodiment, is a hydraulic device and is connected to the bottom side of the discharge member 21.

The spreading member 3 is provided below the hopper 2 and is rotatably bearing-supported in a housing 51 accommodating transmission members and being supported by the frame portion 5. The housing 51 comprises transmission members, by means of which the spreading member 3 can be driven from a coupling shaft 52 which can be coupled to the power take-off shaft of the tractor 8 via an intermediate shaft 53. The spreading member 3 comprises a disc-shaped portion 54, on which thrower blades 55 are fitted. According to the invention, the spreading member has a large diameter 56 which encloses the tips of the blades 55. In this embodiment, the disc 54 is circular having the diameter 56. However, the disc 54 may also be of a smaller diameter, the tips of the thrower blades 55 then projecting beyond the disc. Preferably, the diameter 56 is approximately 100 cms or more, e.g. approximately 120 cms. In this embodiment, the thrower blades 55 are, seen in plan view, of a curved shape. The thrower blades 55 extend such that, from the end 58 located near the periphery of the spreading member, they extend forwardly relative to the direction of rotation 57 of the spreading member 3 during operation. The ends 59 located nearest to the centre of the spreading member then significantly lead the ends 58. The ends 58 and the ends 59 nearest to the centre of the spreading member are staggered through an angle 60 of approximately 50° relative to each other about the centre of the spreading member 3. The centre of the spreading member, formed by its axis of rotation, lies in this embodiment at a distance from the pivotal axis 37, about which the guide member 24 can be adjusted.

At a short distance from the spreading member's circumference, sensors 63 and 64 are arranged approximately diametrically opposite each other relative to the axis of rotation of the spreading member. The sensor 63 is located, relative to the direction of operative travel 19, near the leading end of the spreading member 54 and the sensor 64 near the trailing end thereof. Relative to a plane 65 extending in the direction of operative travel 19 and including the axis of rotation of the spreading member 3, the sensor 63 is located, taken in the direction of operative travel 19, at a relatively short distance 66 to the right thereof, while the sensor 64 is located at a distance 67 to the left thereof. Consequently, the sensors 63 and 64 are located on either side of the plane 65. In this embodiment, the distances 66 and 67 are identical.

The spreading member 3 has an upwardly extending shaft 70, the centre line of which forms the axis of rotation of the spreading member and which is provided at its upper side with an eccentric mechanism 71. About the eccentric mechanism 71 there is arranged rotatably a shaker arm 72 which is coupled pivotably to an arm 73, which itself is rigidly fitted to the discharge member.

The spreader includes a control device 75 which is coupled to various parts of the spreader by means of flexible members. By means of two flexible lines 76 the control device 75 is coupled to the adjusting device 48. By means of flexible lines 77 the control device is coupled to the adjusting device 38. The sensors 63 and 64 are coupled to the control device 75 by means of flexible lines 78 (only shown in Figures 6 and 7). In addition, the control device 75 is coupled by means of a flexible connection 80 to members which are movable in dependence on the rate of travel of the tractor, e.g. to the transmission members in the housing between the rear wheels of the tractor.

The control device 75 comprises a control member 82 which co-operates with the adjusting device 38 coupled thereto via the lines 77. The control member 75 has a display 83 which co-operates with the sensors 63 and 64 via the lines 78. The control device 75 furthermore includes a control member 84 which co-operates with the adjusting device 48 via the lines 76. The control device 75 has a display 85 which via a microprocessor or other electronic means provided therein is coupled to the weighing box 36 connected to the lower end of the discharge nozzle 26.

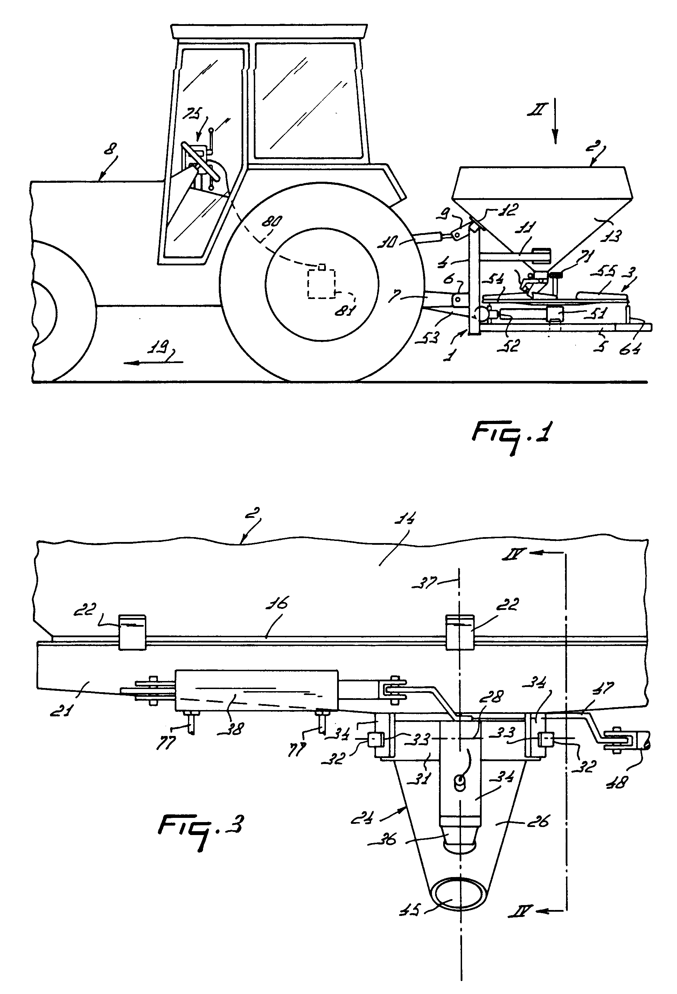

When the spreader is to be used, it is coupled to the lifting hitch of a tractor or a suchlike vehicle, as is shown in Figure 1. In addition, the coupling shaft 52 is coupled by means of the intermediate shaft 53 to the power take-off shaft of the tractor for driving the spreader member 3 in the direction as indicated by the arrow 57. During operation, the material to be spread is carried along in the hopper 2 and the spreader is moved over the surface area to be spread in the direction indicated by the arrow 19.

During travel of the machine in the direction indicated by the arrow 19 and rotation of the spreader member 54 in the direction indicated by the arrow 57, material is fed from the hopper 2 through the discharge outlet 23 and via the guide member 24 to the spreader member 54. The outflow opening 45 of the nozzle 26 ends, in plan view, eccentrically relative to the axis of rotation of the spreader member 54 thereabove. From the position where it lands on the spreading member 54, the material is fed to the periphery of the spreader member and in particular to the tips 58 of the thrower blades 55 due to the rotation of the spreader member 54. Because of its eccentric supply to the spreader member, the material is thrown through only part of the spreader member's periphery. The position where the material is fed to the spreading member, the shape of the spreading member, in particular that of the thrower blades, as well as the speed of rotation are chosen such that, in this embodiment, the material leaves the spreading member's periphery at an angle of approximately 180° about the axis of rotation 37. The outermost spread lines 87 and 88, between which the material leaves the spreading member's periphery, are, in this embodiment, approximately parallel to each other. The material leaves the spreading member via the boundary line 87 to the right of the machine, taken in the direction of operative travel 19, and along the line 88 to the left of the machine. Within said spread lines 87 and 88, the material is distributed uniformly via directions along the spread lines 89 ranging between spread line 87 and spread line 88.

Because of its large diameter 56, the spreading member 3 can rotate at relatively low speed so as still to be able to spread the material at such a high speed that said material can be thrown thereby over a comparatively large width. The fact that the spreading member need only rotate at a comparatively low speed of rotation has the advantage that the material fed to the spreading member is taken up thereby and by the thrower blades 55 with impact forces which are comparatively small. In this connection, the material is fed advantageously to the spreading member near its centre, as is apparent from the embodiment shown in the drawings. As a result, the material's structure will not be adversely affected on coming into contact with parts of the spreading member. Therefore, material having e.g. a certain grain structure will preserve same, without the grains being broken to any significant extent. This has an advantageous influence on the uniform distribution of the material. The speed of rotation of the spreading member will then be kept below approximately 500 revs/min and, preferably, be less than approximately 350 revs/min.

The supply of the material from the hopper 2 to the spreading member 3 is influenced advantageously by the oscillatory or shaking movement of the discharge member 21 and the guide member 24. During rotation of the spreading member and consequently of the shaft 70 and the eccentric mechanism 71, said eccentric mechanism 71 imparts an oscillatory or shaking movement to the discharge member 21 and to the guide member 26 in the direction indicated by the arrow 90.

The quantity of material to flow through the discharge outlet 23 per unit of time can be controlled by adjustment of the doser slide 47 via the adjusting device 48. The adjusting device 48 can be controlled via the lines 76 from the control device 75 by means of the control lever 84. The material flowing away through the discharge outlet 23 is collected by the guide member 24. The guide member 24 is suspended pivotably about the pivotal axis 28 within the carrier bracket 31. A vertically downward sagging about the pivotal axis 28 is prevented by the connection of the guide member 24 to the weighing box 36. In dependence on the quantity of material supplied per unit of time by the guide member 24 to the spreading member 54, a greater or smaller quantity of material will always be present in the discharge nozzle 26. Thus, the guide member 24 constitutes a holder for the portion of the material that flows to the spreading member 3. The weight of the quantity of material in the discharge nozzle 26 is established by the weighing box 36. The indication of said weight is transferred via the line 86 to the electronic section, e.g. a microprocessor section, of the control device 75.

The speed at which the spreader travels in the direction of the arrow 19 is also transferred to the electronic section of the control device 75 via the line 80 from the transmission mechanism 81 in the tractor drive. The data as to speed and weight of the quantity of material present on the average in the discharge nozzle 26 provide, in dependence on the more or less constant spread width, an indication on a display device, such as the display 85, of the quantity of material spread per surface unit, e.g. in kgs/hectare. If the quantity actually spread per hectare does not tally with the desired quantity of material to be spread per hectare, the slide 47 can be opened to a greater or lesser extent by operating the control lever 84. The movement of the control lever 84 is transferred to the hydraulic adjusting device 48 via the lines 76. To that effect, in this embodiment, the hydraulic system of the tractor is coupled to the adjusting device 48 via the control device 75 and the lines 76. Operation of the control lever 84 can then control the hydraulic system for adjusting the adjusting device 48.

Since in the spreader according to the invention it is only necessary to weigh the quantity of material present in the discharge nozzle 26, this quantity of material can be measured accurately. As this quantity is relatively small, it will not or only to a small extent be influenced by the jolts occurring during travel of the spreader in the direction of the arrow 19 over uneven fields. The weight measured by the weighing box 36 is only part of the weight of the guide member 24 and the material contained therein, as a portion of this weight will be absorbed by the pivot pins 27, from which the guide member 24 is suspended. Thus, the guide member 24 and the weighing box 36 constitute a weighing apparatus for only a small part of the machine and a small quantity of material to be spread. Consequently, the weight to be measured by the weighing apparatus 24, 36 is much less than half the weight of the spreader. In this embodiment, the weight to be taken up by the weighing box will be less than 1/10 of the weight of the spreader with empty hopper. For example, the weight of the average quantity of material present in the nozzle will be only a few kilograms or less. Slight differences, if any, in the quantity of material to be present in the guide member 24 during operation can, optionally, be averaged by the electronic equipment provided in the control device 75. For example, this average can be obtained from measuring data measured at short intervals from each other by the weighing box 36. On the basis of the measuring data supplied by the weighing apparatus 24, 36, an advantageous setting of the doser slide 47 is possible to control the quantity of material to be fed to the spreading member. In particular, this control can be made in dependence on the speed at which the spreader travels in the direction of the arrow 19. By means of the flexible connections between the control device 75 and the adjusting devices 38 and 48 present on the spreader, the control device can be installed within the field of vision of the tractor driver inside the tractor cabin, as is shown in Figure 1. Thus, the tractor driver can constantly check the quantity of material spread per hectare and, if necessary, adjust same from the cabin by operating the control lever 84.

The sensors 63 and 64 are arranged such that they are located in, or at a short distance from, the outermost spread lines 87 and 88 of the spread pattern 92, the arrangement being such that, during spreading of the material, the sensors are hit thereby. The sensors 63 and 64 transfer their indication to the electronic section of the control device 75 via the line 78. This electronic section shows in the display 83 by means of the pointer 91 whether the spread pattern is appropriately adjusted relative to, e.g. the machine's centre located in the plane 65. The setting of the direction of spread will usually be such that the material is spread equally far to both sides of said plane 65. When the pointer 91, as in Figure 6, is in the centre of the display 83, the spread pattern is divided equally on both sides of said plane 65, i.e. the material is spread equally far on both sides of the machine's centre. When, for some reason or other, e.g. a different structure of the material to be spread, the spread pattern 92 shifts about the axis of rotation 37 so that one of the sensors is no longer hit by the material, this will be indicated by the sensors. This indication is transferred to the control device 75 via the line 78. The direction of spread will no longer be optimal because of the shift about the axis of rotation 37. However, the direction of spread can be influenced by a change in the position of material supply e.g., as in this embodiment, by changing said position in a direction about the axis of rotation 37. For that purpose, the nozzle 26 is pivotal about the axis 37 by means of the adjusting device 38. By pivoting the nozzle 26 and hence shifting the flow-out aperture 45 about the axis 37, the direction of spread can be adjusted such that both sensors 63 and 64 are hit again by the material thrown along the outermost spread lines 87 and 88. When, for some reason or other, the spread pattern is shifted about the axis 37 and consequently one of the sensors 63 and 64 is no longer hit, this is shown in the display 83 by a deflection of the pointer 91 to the left or to the right thereof. Thus, during operation, the tractor driver is able to check whether the material is still spread in the proper manner on both sides of the centre of the machine. When the pointer 91 indicates that this is no longer the case, the direction of spread can be adjusted in a direction about the axis of rotation 37 by adjustment of the guide nozzle 26 about the axis 37. This adjustment can be effected via the adjusting device 38. The adjusting device 38 can be influenced via the lines 77 by adjustment of the control lever 82 of the control device 75.

The invention described in the foregoing with reference to an embodiment provides a spreader, by means of which the material can be distributed appropriately and uniformly over a surface area to be spread.

Figure 6 shows a control device 75 including control levers 82 and 84. During operation, the said control levers 82 and 84 are operable by the driver to effect any necessary adjustment of the doser slide 47 and/or of the guide member 24 in response to an indication on the display screens 83 and/or 85. This manual operation of the levers 82 and 84 can be omitted when an automatically operating control device is employed.

Figure 7 is an illustration of a control device 93 without control levers 82 and 84. The control device 93 so processes the data obtained from the weighing apparatus 24, 36 and the sensors 63 and 64 that the apparatus for controlling the adjusting devices 38 and 48, present in the control device 93, is controlled by these data to effect any desired adjustment of the adjusting device 38 and/or the adjusting device 48. The control device 93 has keys 94, by means of which the desired various data, such as e.g. the quantity of material to be spread per hectare, can be inputted into the electronic section, e.g. a microprocessor. The displays 95 and 96 display the same picture information as the displays 83 and 85.

## Claims

1. A machine for spreading material, e.g. fertilizer, which machine comprises a frame (1), a hopper (2) and at least one spreading member (3), the machine includes a weighing apparatus (24, 36) provided below a discharge outlet (23) of the hopper, via which weighing apparatus, during operation, material is fed to the spreading member (3), the weighing apparatus (24, 36) being bearing supported, in horizontal position of the machine, by an at least substantially horizontal pivot axis (28), characterized in that the horizontal pivot axis (28) lies in one plane with an upwardly extending pivotal axis (37) through the centre of the discharge outlet (23).

2. A machine as claimed in claim 1, characterized in that the weighing apparatus (24, 36) forms a guide member (24, 26) which is adjustable with respect to the position of the spreading member (3) in the machine, the arrangement being such that therewith the direction of spread of the material to be spread by the spreading member can be controlled.

3. A machine as claimed in claim 2, characterized in that the weighing apparatus (24, 36) is adjustable about the upwardly extending pivotal axis and that the spreading member is drivable about an upwardly extending axis of rotation.

4. A machine as claimed in any one of the preceding claims, characterized in that the outflow opening (45) of the weighing apparatus (26, 36) is located at a distance (44) from the upwardly extending pivotal axis (37), which exceeds that of outer boundaries of the discharge outlet (23) to that pivotal axis (37).

5. A machine as claimed in any one of the preceding claims, characterized in that the weighing apparatus (24, 36) includes a material-receiving holder (24) which, at least during operation, is arranged movably about the horizontal pivot axis (28) in the machine and is connected at least partially to parts of the machine via a weighing device (36).

6. A machine as claimed in claim 5, characterized in that the bearings for the weighing apparatus (24, 36) are arranged on a carrier member (35) which itself is provided pivotably about the upwardly extending pivotal axis (37).

7. A machine as claimed in any one of the preceding claims, characterized in that the feed of material through the discharge outlet (23) to the weighing apparatus (24, 36) is controllable and that the machine includes a control device (75) coupled with an adjusting device (48), by means of which the quantity if material to be spread per unit of surface area can be controlled automatically through the control device (75, 93) by the weighing apparatus (24, 36) during operation.

8. A machine as claimed in claim 7, characterized in that the control device (75) has a display (85), which indicates at least substantially continuously the quantity of material spread per unit of surface area during operation.

9. A machine as claimed in claim 7 or 8, characterized in that the control device (93) includes a keyboard (94) which co-operates with an electronic device such that the number of kilograms to be spread per hectare can be keyed-in and the electronic device automatically controls the position of the dosing device, in dependence on the weight measurement and/or the speed of travel of the machine during operation and/or the spread width, so as to obtain the desired quantity of material to be fed to the spreading member per unit of time to accomplish the spread of the number of kilograms of material per hectare inputted via the keyboard.

10. A machine as claimed in any one of the claims 7 to 9, as far as dependent to claim 2, characterized in that the control device (75, 93) has a display (83, 94) available which, during operation, gives an indication about the direction in which the material is spread, in particular whether this spread is effected in the appropriate direction relative to the centre (65) of the machine.

11. A machine as claimed in claim 10, characterized in that the machine includes at least one sensor (73, 64) co-operating with the control device (75, 93) and located relative to the spreading member (3) in such way that, during operation, it is located at least near the paths of the spread material to furnish an indication of the direction of spread of the material.

12. A machine as claimed in claim 11, characterized in that at the periphery of the spreading member (3) there are fitted at least two sensors (63, 64) which furnish an indication of the direction of spread of the material during operation and which are fitted near the outermost spread lines (87, 88) of the material spread over a sector (9) around the periphery of the spreading member.

13. A machine as claimed in claim 11 or 12, characterized in that the guide member (24) is coupled to an adjusting device (38), by means of which the guide member is adjustable with respect to the position of the spreading member (3), which adjusting device is coupled to the control device (75) which co-operates with the sensor (63, 64), the arrangement being such that the indication produced by the sensor effects via the electronic means in the control device an automatic adjustment of the guide member to establish the appropriate direction of spread of the material to be spread.

14. A machine as claimed in any one of claims 7 to 13, characterized in that the weighing device (36) is attached to a discharge member (21) which is contiguous to the flow-out aperture (23) of the hopper fitted to the machine, which discharge member is coupled to an oscillatory or shaker device (71) for imparting, during operation, a vibratory movement to the discharge member and the parts connected thereto.

## Patentansprüche

1. Streugerät, z.B. für Düngemittel, mit einem Rahmen (1), einem Vorratsbehälter (2) und mindestens einem Streuglied (3), sowie mit einer Wägevorrichtung (24, 36), die unterhalb eines Auslasses (23) des Vorratsbehälters angebracht ist, und über die während des Arbeitsvorganges dem Streuglied (3) Streugut zugeführt wird,wobei die Wägevorrichtung in horizontaler Lage des Gerätes von einer zumindest im wesentlichen horizontalen Schwenkachse (28) tragend abgestützt ist, dadurch gekennzeichnet, dass die horizontale Schwenkachse (28) in einer Ebene liegt mit einer durch die Mitte des Auslasses (23) gehenden, aufwärts gerichteten Schwenkachse (37).

2. Streugerät nach Anspruch 1, dadurch gekennzeichnet, dass die Wägevorrichtung (24, 36) ein Führungsglied (24, 26) bildet, welches hinsichtlich der Position des Streuglieds (3) im Streugerät verstellbar ist, derart dass die Streurichtung des durch das Streuglied zu streuenden Gutes gesteuert werden kann.

3. Streugerät nach Anspruch 2, dadurch gekennzeichnet, dass die Wägevorrichtung (24, 36) um die aufwärts gerichtete Schwenkachse verstellbar ist und das Streuglied um eine aufwärts gerichtete Rotationsachse antreibbar ist.

4. Streugerät nach einem der vorigen Ansprüche, dadurch gekennzeichnet, dass die Auslassöffnung (45) der Wägevorrichtung (26, 36) zu der aufwärts gerichteten Schwenkachse (37) in einem Abstand (44) angebracht ist, der grösser ist als der Abstand der äusseren Begrenzung des Auslasses (23) zu dieser Schwenkachse (37).

5. Streugerät nach einem der vorigen Ansprüche, dadurch gekennzeichnet, dass die Wägevorrichtung (24, 36) einen Streugut-Aufnahmebehälter (24) enthält, der zumindest während des Arbeitsvorgangs beweglich um die horizontale Schwenkachse (28) im Streugerät angebracht und zumindest teilweise über eine Wägeeinrichtung (36) mit Teilen des Streugerätes verbunden ist.

6. Streugerät nach Anspruch 5, dadurch gekennzeichnet, dass die Lager für die Wägevorrichtung (24, 36) auf einem Träger (35) angebracht sind, der selbst um die aufwärts gerichtete Schwenkachse (37) drehbar ist.

7. Streugerät nach einem der vorigen Ansprüche, dadurch gekennzeichnet, dass die Gutzufuhr durch den Auslass (23) hindurch zur Wägevorrichtung (24, 36) steuerbar ist und dass das Streugerät eine Steuervorrichtung (75, 93) enthält, die mit einer Stellvorrichtung (48) gekoppelt ist, wodurch die pro Oberflächeneinheit auszustreuende Streugutmenge automatisch durch die Steuervorrichtung (75, 93) von der Wägevorrichtung (24, 36) während des Arbeitsvorgangs gesteuert werden kann.

8. Streugerät nach Anspruch 7, dadurch gekennzeichnet, dass die Steuervorrichtung (75) ein Display (85) hat, das während des Betriebs zumindest im wesentlichen kontinuierlich die Menge des pro Oberflächeneinheit gestreuten Gutes anzeigt.

9. Streugerät nach Anspruch 7 oder 8, dadurch gekennzeichnet, dass die Steuervorrichtung (93) eine Schalttafel (94) enthält, die mit einer elektronischen Vorrichtung so zusammenarbeitet, dass zum Ausstreuen die Kilogrammzahl pro Hektar eingegeben werden kann und die elektronische Vorrichtung automatisch die Position der Dosiervorrichtung steuert in Abhängigkeit von der Gewichtsmessung und/oder der Fahrgeschwindigkeit des Streugeräts während des Betriebs und/oder der Streubreite, so dass die gewünschte Menge des dem Streuglied zuzuführenden Gutes pro Zeiteinheit erhalten wird, um die über die Schalttafel zum Ausstreuen eingegebene Kilogrammzahl pro Hektar zu erreichen.

10. Streugerät nach einem der Ansprüche 7 bis 9, soweit abhängig von Anspruch 2, dadurch gekennzeichnet, dass die Steuervorrichtung (75, 93) ein Display (83, 94) aufweist, das während des Betriebs anzeigt, in welche Richtung das Gut gestreut wird, insbesondere, ob diese Streuung in der passenden Richtung relativ zur Mitte (65) des Streuers ausgeführt wird.

11. Streugerät nach Anspruch 10, dadurch gekennzeichnet, dass das Streugerät wenigstens einen Sensor (63, 64) aufweist, der mit der Steuervorrichtung (75, 93) zusammenarbeitet und bezüglich des Streugliedes (3) so angebracht ist, dass er sich während des Betriebs zumindest nahe der Streuwege befindet, um eine Richtungsanzeige des gestreuten Materials zu liefern.

12. Streugerät nach Anspruch 11, dadurch gekennzeichnet, dass an der Peripherie des Streuglieds (3) mindestens zwei Sensoren (63, 64) befestigt sind, die eine Richtungsanzeige der Streuung des Gutes während des Betriebs liefern, und die nahe der äussersten Streulinien (87, 88) des über einen Sektor (9) um die Peripherie des Streuglieds gestreuten Materials angebracht sind.

13. Streugerät nach Anspruch 11 oder 12, dadurch gekennzeichnet, dass das Führungsglied (24) mit einer Stellvorrichtung (38) verbunden ist und dadurch das Führungsglied verstellbar ist hinsichtlich der Position des Streuglieds (3), wobei die Stellvorrichtung mit der Steuervorrichtung (75) gekoppelt ist, die mit dem Sensor (63, 64) zusammenarbeitet, derart, dass die vom Sensor gelieferte Anzeige über die elektronische Vorrichtung in der Steuerung eine automatische Einstellung des Führungsgliedes bewirkt, um die passende Streurichtung des zu streuenden Gutes festzulegen.

14. Streugerät nach einem der Ansprüche 7 bis 13, dadurch gekennzeichnet, dass die Wägevorrichtung (36) an einem Auslassteil (21) angebracht ist, das an die Auslassöffnung (23) des Vorratsbehälters angrenzt, der am Streugerät befestigt ist, und dass das Auslassteil mit einer Schwing- oder Schüttelvorrichtung (71) verbunden ist, die während des Betriebs dem Auslassteil und den mit ihm verbundenen Teilen eine vibrierende Bewegung verleiht.

## Revendications

1. Machine pour épandre de la matière, par exemple de l'engrais, cette machine comprenant un châssis (1), une trémie (2) et au moins un organe épandeur (3), la machine comprend un appareil de pesée (24, 36) prévu sous un orifice de décharge (23) de la trémie, à travers lequel appareil de pesée de la matière est débitée à l'organe épandeur (3) au cours du travail, l'appareil de pesée (24, 36) étant supporté par des paliers, en position horizontale de la machine, par un axe de pivotement (28) au moins sensiblement horizontal,
**caractérisée** en ce que l'axe horizontal de pivotement (28) est situé dans un même plan qu'un axe de pivotement (37) s'étendant vers le haut en passant par le centre de l'orifice de décharge (23).

2. Machine selon la revendication 1, caractérisée en ce que l'appareil de pesée (24, 36) constitue un organe de guidage (24, 36) qui est réglable par rapport à la position de l'organe épandeur (3) dans la machine, l'agencement étant tel qu'il permet de commander la direction de l'épandage de la matière à épandre par l'organe épandeur.

3. Machine selon la revendication 2, caractérisée en ce que l'appareil de pesée (24, 36) est réglable autour de l'axe de pivotement s'étendant vers le haut, et en ce que l'organe épandeur peut être entraîné autour d'un axe de rotation s'étendant vers le haut.

4. Machine selon l'une quelconque des revendications précédentes, caractérisée en ce que l'ouverture d'écoulement (45) hors de l'appareil de pesée (24, 36) est située, par rapport à l'axe de pivotement (37) s'étendant vers le haut, à une distance (44) supérieure à celle entre les bords extérieurs de l'orifice de décharge (23) et cet axe de pivotement (37).

5. Machine selon l'une quelconque des revendications précédentes, caractérisée en ce que l'appareil de pesée (24, 36) comporte un support (24) recevant la matière, qui est disposé, au moins pendant le travail, de manière mobile autour de l'axe horizontal de pivotement (28) dans la machine et est relié, au moins partiellement, à des parties de la machine par l'intermédiaire d'un dispositif de pesée (36).

6. Machine selon la revendication 5, caractérisée en ce que les paliers pour l'appareil de pesée (24, 36) sont disposés sur un organe porteur (35) qui est lui-même prévu pivotant autour de l'axe de pivotement (37) s'étendant vers le haut.

7. Machine selon l'une quelconque des revendications précédentes, caractérisée en ce que le débit de matière à travers l'orifice de décharge (23) vers l'appareil de pesée (24, 36) peut être commandé, et en ce que la machine comporte un dispositif de commande (75) couplé à un dispositif de réglage (48) au moyen duquel la quantité de matière à épandre par unité de surface du terrain peut être commandée automatiquement à travers le dispositif de commande (75, 93) par l'appareil de pesée (24, 36) au cours du travail.

8. Machine selon la revendication 7, caractérisée en ce que le dispositif de commande (75) a un affichage (85) qui indique de manière au moins pratiquement continue la quantité de matière épandue par unité de surface au cours du travail.

9. Machine selon la revendication 7 ou 8, caractérisée en ce que le dispositif de commande (93) comporte un clavier (94) qui coopère avec un dispositif électronique de telle sorte que le nombre de kilogrammes à épandre par hectare puisse être introduit au clavier et que le dispositif électronique commande automatiquement la position du dispositif doseur en fonction de la mesure de poids et/ou de la vitesse de circulation de la machine au cours du travail et/ou de la largeur d'épandage, de façon à obtenir la quantité voulue de matière à fournir à l'organe épandeur par unité de temps pour accomplir l'épandage du nombre de kilogrammes de matière par hectare tel qu'il a été introduit au clavier.

10. Machine selon l'une quelconque des revendications 7 à 9, pour autant qu'elles dépendent de la revendication 2,
**caractérisée** en ce que le dispositif de commande (75, 93) a un affichage (83, 94) disponible qui donne au cours du travail une indication au sujet de la direction dans laquelle la matière est épandue, en particulier pour savoir si cet épandage est fait dans la direction appropriée par rapport au centre (65) de la machine.

11. Machine selon la revendication 10, caractérisée en ce que la machine comporte au moins un capteur (73, 64) coopérant avec le dispositif de commande (75, 93) et situé par rapport à l'organe épandeur (3) de telle manière qu'il soit situé pendant le travail au moins près des trajets de la matière épandue pour fournir une indication de la direction d'épandage de la matière.

12. Machine selon la revendication 11, caractérisée en ce qu'à la périphérie de l'organe épandeur (3) sont montés au moins deux capteurs (63, 64) qui fournissent une indication de la direction d'épandage de la matière pendant le travail et qui sont montés près des lignes d'épandage les plus extérieures (87, 88) de la matière épandue sur un secteur (9) autour de la périphérie de l'organe épandeur.

13. Machine selon la revendication 11 ou 12, caractérisée en ce que l'organe de guidage (24) est couplé à un dispositif de réglage (38) au moyen duquel l'organe de guidage est réglable par rapport à la position de l'organe épandeur (3), lequel dispositif de réglage est couplé au dispositif de commande (75) qui coopère avec le capteur (63, 64), l'agencement étant tel que l'indication produite par le capteur effectue, par l'intermédiaire du moyen électronique dans le dispositif de commande, un réglage automatique de l'organe de guidage pour établir la direction appropriée d'épandage de la matière à épandre.

14. Machine selon l'une quelconque des revendications 7 à 13, caractérisée en ce que le dispositif de pesée (36) est attaché à un organe de décharge (21) qui est contigu à l'ouverture d'écoulement (23) hors de la trémie montée sur la machine, lequel organe de décharge est couplé à un dispositif oscillant ou secoueur (71) pour impartir pendant le travail un mouvement vibratoire à l'organe de décharge et aux éléments reliés à celui-ci.
